# EUROPÄISCHE PATENTSCHRIFT

(11) **EP 1 950 496 B1**
(45) Veröffentlichungstag und Bekanntmachung des Hinweises auf die Patenterteilung: **26.03.2014**
(21) Anmeldenummer: 08000378.3
(22) Anmeldetag: 10.01.2008
(51) Int. Cl.: F23N 1/08, F23N 5/24, F23N 1/02, B60H 1/22

(54) **Fahrzeugheizgerät und Verfahren zum Betreiben eines Fahrzeugheizgeräts**
Automobile heating device and method for operating such an automobile heating device
Appareil de chauffage de véhicule et procédé de fonctionnement d'un tel appareil

(30) Priorität: 23.01.2007 DE 102007003438
(43) Veröffentlichungstag der Anmeldung: 30.07.2008
(73) Patentinhaber: Eberspächer Climate Control Systems GmbH & Co. KG, 73730 Esslingen (DE)
(72) Erfinder: Schlecht, Patric, 73760 Ostifildern (DE)
(74) Vertreter: Ruttensperger, Bernhard

(56) Entgegenhaltungen:
- EP-A2- 0 892 215
- DE-A1- 4 446 829
- DE-A1- 19 718 407

## Beschreibung

Die vorliegende Erfindung betrifft ein Fahrzeugheizgerät sowie ein Verfahren zum Betreiben eines derartigen Fahrzeugheizgerätes.

Als Standheizungen oder Zuheizer in modernen Kraftfahrzeugen eingesetzte Fahrzeugheizgeräte sind allgemein mit einer Brenneranordnung aufgebaut, in deren Brennkammer flüssiger Brennstoff und Verbrennungsluft eingespeist werden, um bei Verbrennung des daraus entstehenden Gemisches Wärme bereitzustellen. Die Verbrennungsluft wird durch ein Verbrennungs-luft-Förderorgan in die Brennkammer eingeleitet. Der flüssige Brennstoff wird durch eine Brennstoffzuführanordnung, beispielsweise eine Dosierpumpe, eingespeist. Die unter Verbrennung entstehende Wärme wird im Bereich einer Wärmetauscheranordnung auf ein Heizmedium übertragen, wobei die Wärmetauscheranordnung ein Wärmetauschergehäuse umfasst, entlang welchem das durch ein Heizmedium-Förderorgan geförderte Heizmedium strömt. Eine Temperaturfühleranordnung dient dazu, eine Temperaturgröße zu erfassen, die mit der Temperatur des Heizmediums bzw. der Wärmetauscheranordnung in einem Abströmbereich der Wärmetauscheranordnung in Zusammenhang steht. Eine Ansteuervorrichtung empfängt das diese Temperaturgröße repräsentierende Signal von der Temperaturfühleranordnung und vergleicht die dadurch wiedergegebene Temperaturgröße mit einer dieser zugeordneten Temperaturgrößenschwelle.

Durch diesen Vergleich wird es möglich, zu erkennen, ob das Fahrzeugheizgerät in einem ordnungsgemäßen Betriebszustand ist, oder ob ein Überhitzungszustand auftritt, in welchem die in der Brennanordnung bereitgestellte Wärme nicht mehr in geeigneter Weise abgeführt werden kann. Ein derartiger Überhitzungszustand kann beispielsweise auftreten, wenn durch übermäßige Verdämmung des auf die Wärmetauscheranordnung folgenden Strömungsweges des Heizmediums dessen Strömung stark eingeschränkt ist oder zum Erliegen kommt. Wird ein derartiger Überhitzungszustand erkannt, so kann ein entsprechendes Störungssignal erzeugt werden oder das Heizgerät in einen Störungsbetriebszustand gebracht werden, in welchem beispielsweise aus Sicherheitsgründen die Verbrennung vollständig eingestellt wird.

Ein derartiges Fahrzeugheizgerät ist aus DE 19718407 bekannt.

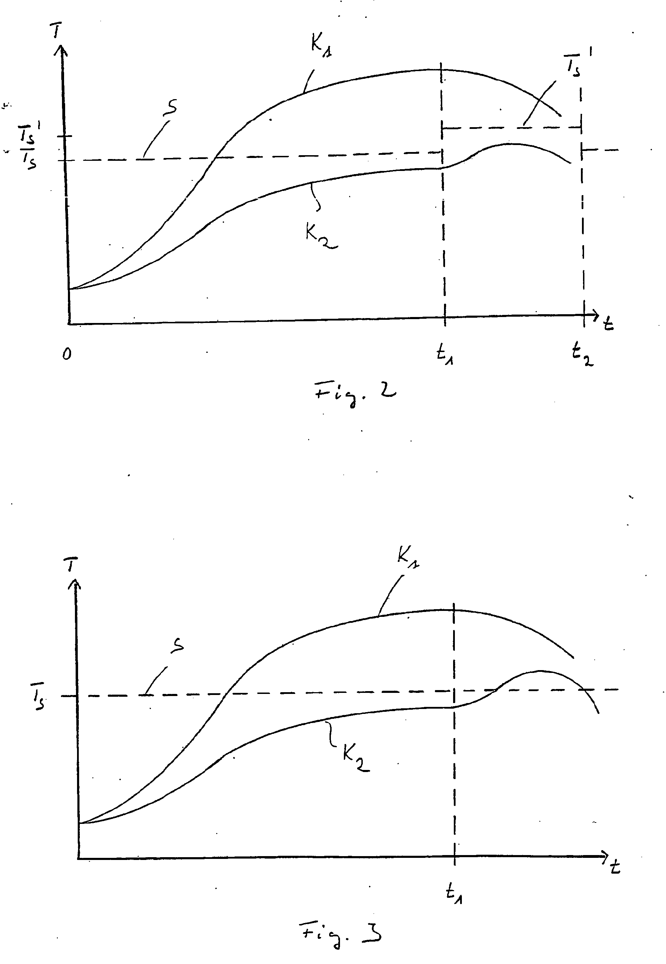

Vor allem dann, wenn ein derartiges Fahrzeugheizgerät zum Erwärmen von in einen Fahrzeuginnenraum einzuleitender Luft eingesetzt wird, ist es aus Kostengründen und auch aus Bauraumgründen vorteilhaft, für das Verbrennungsluft-Förderorgan und das Heizmedium-Förderorgan einen einzigen Antrieb, also beispielsweise einen einzigen Elektromotor, bereitzustellen. Die beiden Förderorgane sitzen dann beispielsweise auf den beiden Enden einer Antriebswelle eines derartigen Elektromotors und rotieren somit grundsätzlich mit der gleichen Drehgeschwindigkeit. Soll bei einem derart aufgebauten Heizgerät dann die Heizleistung beispielsweise ausgehend von einem Zustand maximaler Heizleistung verringert werden, wird im Allgemeinen die Brennstoff-Fördermenge verringert, einhergehend mit einer entsprechenden Verringerung der Verbrennungsluft-Fördermenge, um das in der Brennkammer bereitgestellte Gemisch im Verhältnis Verbrennungsluft/Brennstoff nicht zu verändern. Die Verringerung der Verbrennungsluft-Fördermenge führt dann jedoch zwangsweise auch zu einer Verringerung der Heizmedium-Fördermenge. Die daraus resultierende Problematik im Betrieb eines derartigen Fahrzeugheizgeräts ist in Fig. 3 verdeutlicht.

Dort zeigt eine Kurve K₁ den Verlauf eines durch einen so genannten Flammfühler erzeugten Signals. Dieser Flammfühler kann beispielsweise die Temperatur der die Brennkammer verlassenden Verbrennungsprodukte erfassen. Soll beispielsweise zu einem Zeitpunkt t₁ die Heizleistung verringert werden, wozu, wie bereits angegeben, die Verbrennungsluft-Fördermenge und die Brennstoff-Fördermenge verringert werden, wird entsprechend die beispielsweise die Temperatur der Verbrennungsprodukte repräsentierende Kurve K₁ ab dem Zeitpunkt t₁ abnehmen. Da zunächst noch vergleichsweise hohe Temperaturen im Bereich der Brennkammer vorhanden sind, wird diese Abnahme der Kurve K₁ nur allmählich einsetzen. Zum Zeitpunkt t₁ wird jedoch auch die Heizmedium-Fördermenge reduziert, was bedeutet, dass aus dem Bereich der Wärmetauscheranordnung durch den verringerten Heizmediumstrom auch weniger Wärme abgetragen wird. Bedingt durch die nur allmähliche Temperaturabnahme, insbesondere auch im Bereich der Wärmetauscheranordnung, wird dies zu einem deutlichen Anstieg derjenigen Temperatur führen, die das Heizmedium bzw. die Wärmetauscheranordnung im Bereich des Abströmbereichs der Wärmetauscheranordnung aufweisen. Eine diese Temperaturgröße in Fig. 3 repräsentierende Kurve K₂ zeigt somit beginnend zum Zeitpunkt t₁ einen deutlichen Anstieg. Die Temperaturgröße kann dabei eine dieser zugeordnete Temperaturgrößenschwelle S überschreiten. Dies wird jedoch bei dem vorangehend angegebenen Vergleich der Temperaturgröße mit der ihr zugeordneten Temperaturgrößenschwelle S als Überhitzungszustand interpretiert werden, so dass es zu einer Störabschaltung kommen kann. Da, wie der weitere Verlauf der Kurve K₂ in Fig. 3 zeigt, die Temperaturgröße jedoch auch einhergehend mit dem Abnehmen der Kurve K₁ wieder sinken wird, wird auch die zugeordnete Temperaturgrößenschwelle wieder unterschritten, so dass tatsächlich kein kritischer Überhitzungszustand vorhanden war und mithin die beim Überschreiten der Temperaturgrößenschwelle S ergriffene Maßnahme an sich nicht erforderlich gewesen wäre.

Es ist die Aufgabe der vorliegenden Erfindung, ein Fahrzeugheizgerät und ein Verfahren zum Betreiben eines Fahrzeugheizgerätes bereitzustellen, mit welchen in zuverlässiger Weise das Ergreifen von in einem Überhitzungszustand vorgesehenen Sicherheitsmaßnahmen verhindert wird, wenn das Ergreifen dieser Maßnahmen tatsächlich nicht erforderlich ist.

Gemäß einem ersten Aspekt der Erfindung wird diese Aufgabe gelöst durch ein Fahrzeugheizgerät, umfassend eine Brenneranordnung mit einer Brennkammer, eine Brennstoffzuführanordnung zum Einspeisen von Brennstoff in die Brennkammer, ein Verbrennungsluft-Förderorgan zum Fördern von Verbrennungsluft in die Brennkammer, eine Wärmetauscheranordnung mit einem die Brenneranordnung wenigstens bereichsweise umgebenden Wärmetauschergehäuse, ein Heizmedium-Förderorgan zum Fördern von zu erwärmendem Heizmedium durch die Wärmetauscheranordnung entlang einer Außenseite des Wärmetauschergehäuses, eine Temperaturfühleranordnung zur Erfassung einer mit der Temperatur des Heizmediums in einem Abströmbereich der Wärmetaüscheranordnung in Zusammenhang stehenden Temperaturgröße, eine Ansteuervorrichtung, welche ein die Temperaturgröße repräsentierendes Signal von der Temperaturfühleranordnung empfängt und die Temperaturgröße mit einer zugeordneten Temperaturgrößenschwelle vergleicht, wobei die Ansteuervorrichtung dann, wenn die Temperaturgröße die Temperaturgrößenschwelle übersteigt, das Vorliegen eine Überhitzungszustandes erkennt, wobei die Ansteuervorrichtung dazu ausgebildet ist, dann, wenn die Heizleistung durch Verringerung der Verbrennungsluft-Fördermenge oder/und der Brennstoff-Fördermenge zu verringern ist, die Temperaturgrößenschwelle zu erhöhen.

Erfindungsgemäß wird also dann, wenn durch entsprechenden Befehl bzw. die Erzeugung entsprechender Ansteuermaßnahmen die Heizleistung des Fahrzeugheizgeräts verringert werden soll, die Temperaturgrößenschwelle erhöht. Ein kurzzeitiger Anstieg der Temperaturgröße, welcher durch einen Wärmestau im Bereich des Abströmbereichs der Wärmetauscheranordnung erzeugt wird, wird dann tatsächlich nicht als Überhitzungszustand erkannt und führt mithin nicht zum Ergreifen in dieser Phase nicht erforderlicher Sicherheitsmaßnahmen.

Diese Ausgestaltung der Ansteuervorrichtung ist vor allem dann vorteilhaft, wenn dem Verbrennungsluft-Förderorgan und dem Heizmedium-Förderorgan ein gemeinsamer Antrieb zugeordnet ist.

Der gemeinsame Antrieb kann beispielsweise einen gemeinsamen Antriebsmotor, wie z. B. Elektromotor, umfassen.

Insbesondere dann, wenn das Heizmedium Heizluft ist, die beispielsweise in dem Innenraum eines Fahrzeugs zu leiten ist, können das Heizmedium-Förderorgan und das Verbrennungsluft-Förderorgan jeweils als Förderrad ausgebildet sein.

Das erfindungsgemäße Heizgerät kann beispielsweise derart aufgebaut sein, dass die Temperaturfühleranordnung einen im Abströmbereich der Wärmetauscheranordnung vorgesehenen Temperaturfühler umfasst.

Da die Temperatur des Wärmetauschergehäuses im Wesentlichen auch in definiertem Zusammenhang mit der Temperatur des aus dem Bereich der Wärmetauscheranordnung abströmenden Heizmediums steht, kann weiter vorgesehen sein, dass der Temperaturfühler an einem abströmseitigen Endbereich des Wärmetauschergehäuses angeordnet ist.

Gemäß einem weiteren Aspekt der vorliegenden Erfindung wird die eingangs genannte Aufgabe gelöst durch ein Verfahren zum Betreiben eines Fahrzeugheizgerätes, welches die Maßnahmen umfasst:
a) Einspeisen von Brennstoff und Verbrennungsluft in eine Brennkammer,
b) Überwachen einer im Zusammenhang mit der Temperatur eines zu erwärmenden Heizmediums in einem Abströmbereich einer Wärmetauscheranordnung stehenden Temperaturgröße durch Vergleich mit einer zugeordneten Temperaturgrößenschwelle,
c) dann, wenn die Temperaturgröße die zugeordnete Temperaturgrößenschwelle übersteigt, Erkennen eines Überhitzungszustands,
wobei dann, wenn die Heizleistung durch Veränderung einer Verbrennungsluft-Fördermenge oder/und einer Brennstoff-Fördermenge zu verringern ist, die Temperaturgrößenschwelle erhöht wird.

Bei der erfindungsgemäßen Vorgehensweise zum Betreiben eines Fahrzeugheizgeräts kann zum Vereinfachen der Ansteuermaßnahmen weiter vorgesehen sein, dass zur Verringerung der Heizleistung die Verbrennungsluft-Fördermenge verringert wird und dass bei Verringerung der Verbrennungsluft-Fördermenge die Heizmedium-Fördermenge verringert wird.

Da das Ausmaß der Veränderung der Temperatur im Bereich des Abströmbereichs der Wärmetauscheranordnung im Zusammenhang steht mit dem Ausmaß der Veränderung der Heizleistung, wird gemäß einem weiteren Aspekt der Erfindung vorgeschlagen, dass das Ausmaß der Erhöhung der Temperaturgrößenschwelle im Zusammenhang steht mit dem Ausmaß der Verringerung der Heizleistung.

Um nach Rückkehr zu normalen und einer jeweiligen Heizleistung entsprechenden Temperaturverhältnissen auch wieder die Überhitzungserkennung im normalen Maße durchführen zu können, wird weiter vorgeschlagen, dass die Temperaturgrößenschwelle ab der Erhöhung derselben für eine vorbestimmte Zeitdauer erhöht bleibt. Auch hier kann vorgesehen sein, dass die vorbestimmte Zeitdauer im Zusammenhang steht mit dem Ausmaß der Verringerung der Heizleistung.

Bei einer alternativen Vorgehensweise kann vorgesehen sein, dass die Temperaturgrößenschwelle in Abhängigkeit von der Veränderung der Temperaturgröße nach Erhöhung der Temperaturgrößenschwelle wieder verringert wird. Dazu ist es beispielsweise möglich, dass die Temperaturgrößenschwelle dann, wenn der Gradient der Temperaturgröße eine vorbestimmte negative Gradientenschwelle unterschreitet, wieder verringert wird.

Weiter ist es zur Rückkehr zu der im Normalbetrieb durchzuführenden Überhitzungserkennung möglich, dass die Temperaturgrößenschwelle nach Erhöhung derselben dann wieder verringert wird, wenn die Temperaturgröße einen vor der Erhöhung der Temperaturgrößenschwelle vorhandenen Ausgangswert derselben unterschreitet.

Die Temperaturgrößenschwelle kann beim Übergang in den normalen Überhitzungserkennungsbetriebszustand beispielsweise wieder auf ihren vor der Erhöhung derselben vorhandenen Ausgangswert zurückgesetzt werden.

Die vorliegende Erfindung wird nachfolgend mit Bezug auf die beiliegenden Zeichnungen detailliert erläutert. Es zeigt:
- Fig. 1: eine Prinzipdarstellung eines Fahrzeugheizgeräts;
- Fig. 2: den Temperaturverlauf verschiedener Temperaturgrößen bei einer Variation der Heizleistung des Fahrzeugheizgeräts mit angepasster Temperaturgrößenschwelle;
- Fig. 3: ein der Fig. 2 entsprechendes Diagramm ohne angepasster Temperaturgrößenschwelle.

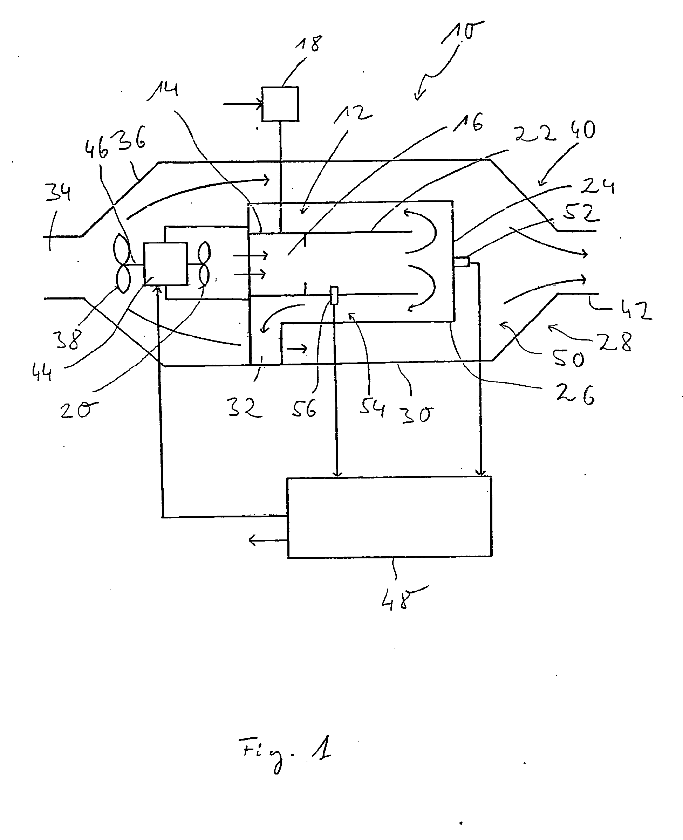

In Fig. 1 ist ein als Standheizung oder Zuheizer einsetzbares Fahrzeugheizgerät allgemein mit 10 bezeichnet. Dieses umfasst als zentrale Baugruppe eine Brenneranordnung 12 mit einer in einem beispielsweise topfartig ausgebildeten Brennkammergehäuse 14 vorhandenen Brennkammer 16. In dieser Brennkammer 16 wird durch eine Brennstoffzuführanordnung 18, beispielsweise eine Dosierpumpe, flüssiger Brennstoff eingespeist. Ein als Förderrad 20 ausgebildetes Verbrennungsluft-Förderorgan fördert die zur Vermischung mit dem eingespeisten Brennstoff erforderliche Verbrennungsluft in die Brennkammer 16. Die bei der Verbrennung entstehenden Verbrennungsabgase strömen dann beispielsweise entlang eines Flammrohrs 22 und treffen an dessen offenem Ende auf den Bodenbereich 24 eines Wärmetauschergehäuses 26 einer allgemein mit 28 bezeichneten Wärmetauscheranordnung auf. Dort werden sie umgelenkt und strömen dann entlang eines zwischen dem Flammrohr 22 und einer Umfangswandung 30 des Wärmetauschergehäuses 26 gebildeten Ringraums, bevor sie an einem Auslass 32 nach außen bzw. in ein Abgasreinigungssystem abgegeben werden.

Bei dem in der Fig. 1 veranschaulichten Fahrzeugheizgerät 10 ist das zu erwärmende Heizmedium ebenfalls Luft, die beispielsweise in die Fahrgastzelle eines Fahrzeugs eingeleitet werden soll. Diese tritt im Bereich einer Eintrittsöffnung 34 in ein äußeres Heizgerätegehäuse 36 ein, und zwar unter der Förderwirkung eines als Heizmedium-Förderorgan wirksamen Förderrads 38. Die Heizluft strömt dann zwischen dem Heizgerätegehäuse 36 und dem Wärmetauschergehäuse 26 hindurch entlang der Außenoberfläche des Wärmetauschergehäuses 26 und kann dabei Wärme aufnehmen. An einem Abströmbereich 40 der Wärmetauscheranordnung 28 tritt die erwärmte Luft dann über eine Austrittsöffnung 42 in das weitere Leitungssystem ein, durch welches diese Luft dann zu verschiedenen in einem Fahrgastraum vorhandenen Auslassöffnungen geleitet wird.

Man erkennt in Fig. 1, dass den beiden Förderrädern 20 und 38 ein gemeinsamer Antrieb in Form eines gemeinsamen Antriebsmotors 44 zugeordnet ist. Dieser beispielsweise als Elektromotor aufgebaute Antriebsmotor 44 trägt an den beiden Enden seiner Antriebswelle 46 die Förderräder 20, 38. Dies bedeutet, dass bei Rotation der Antriebswelle 46 die beiden Förderräder 20, 38 sich mit der gleichen Geschwindigkeit drehen werden. Das Verhältnis der Verbrennungsluft-Fördermenge zur Heizluft-Fördermenge kann beispielsweise durch die Ausgestaltung der beiden Förderräder 20, 38 und selbstverständlich auch durch die Strömungswege, über welche die durch die Eintrittsöffnung 34 eintretende Luft zu den jeweiligen Förderrädern 20 bzw. 38 gelangen kann, eingestellt werden.

Die verschiedenen für den Betrieb des Fahrzeugheizgeräts 10 anzusteuernden Baugruppen, wie z. B. die Brennstoffzuführanordnung 18 oder der Antriebsmotor 44 stehen unter der Ansteuerung einer allgemein mit 48 bezeichneten Ansteuervorrichtung. Diese steuert diese verschiedenen Systembereiche entsprechend den bestehenden Anforderungen an, um das Fahrzeugheizgerät 10 mit einer jeweils erforderlichen Heizleistung zu betreiben. Weiter Empfäng die Ansteuervorrichtung 48 verschiedene Eingangssignale, welche auch die Grundlage für die Ansteuerung der verschiedenen durch diese anzusteuernden Systembereiche bilden können. So umfasst eine Überhitzungs-Temperaturfühleranordnung 50 einen Temperaturfühler 52, der beispielsweise im Bereich der Bodenwandung 24 des Wärmetauschergehäuses 50 vorgesehen sein kann. Das durch diesen Temperaturfühler 52 erzeugte Signal, welches also eine im Zusammenhang mit der Temperatur des Wärmetauschergehäuses 26 bzw. der Heizluft im Abströmbereich 40 der Wärmetauscheranordnung 28 stehende Temperaturgröße repräsentiert, wird zur weiteren Auswertung in die Ansteuervorrichtung 48 eingegeben. Eine Flammtemperaturfühleranordnung 54 umfasst beispielsweise einen im Bereich des Flammrohrs 22 angeordneten Temperaturfühler 56, dessen Ausgangssignal eine im Zusammenhang mit der Verbrennung in der Brennkammer stehende Temperaturgröße repräsentiert. Je intensiver diese Verbrennung ist, desto höher wird die Temperatur der die Brennkammer 16 verlassenden Verbrennungsprodukte sein. Auch dieses Signal wird in die Ansteuervorrichtung 48 eingegeben.

Diese beiden durch die Temperaturfühler 52 und 56 gelieferten Signale bzw. die entsprechenden Temperaturgrößen sind in der Fig. 2 anhand der Kurven K₂ bzw. K₁ wiedergegeben. Die Kurve K₂ zeigt die durch das Ausgangssignal des Temperaturfühlers 52 repräsentierte Temperaturgröße, während die Kurve K₁ die durch das Ausgangssignal des Temperaturfühlers 56 repräsentierte Temperaturgröße darstellt.

Bei Inbetriebnahme des Fahrzeugheizgeräts 10 werden alle Systembereiche desselben im Wesentlichen die gleiche Temperatur aufweisen, so dass zum Zeitpunkt Null tatsächlich auch die beiden Kurven K₁ und K₂ beim gleichen Ausgangswert starten werden. Die Kurve K₁ wird stärker und auch auf höhere Werte ansteigen, da mit beginnender Verbrennung der Temperaturfühler 56 sofort den Temperaturanstieg der Verbrennungsprodukte am bzw. im Flammrohr 22 erfassen wird. Auch das Wärmetauschergehäuse 26 wird sich dann allmählich erwärmen, so dass auch der Temperaturfühler 52, der im Abströmbereich 40 der Wärmetauscheranordnung 28 positioniert ist, einen entsprechenden Temperaturanstieg registrieren wird. Es sei hier darauf hingewiesen, dass dieser Temperaturfühler 52 nicht notwendigerweise in direktem Kontakt mit dem Wärmetauschergehäuse 26 sein muss, er kann tatsächlich auch so gehalten sein, dass er im Wesentlichen nur von der Temperatur der dort strömenden Heizluft beeinflusst wird. Da diese Temperatur jedoch stark im Zusammenhang steht mit der Temperatur des Wärmetauschergehäuses 26, kann durch die gezeigte Positionierung eine schnellere Reaktion der Temperaturänderungen erreicht werden.

Zu einem Zeitpunkt t₁ erhält bzw. erzeugt die Ansteuervorrichtung 48 einen Befehl zum Verringern der Heizleistung. Dies erfolgt im Allgemeinen dadurch, dass durch entsprechende Ansteuerung die Brennstoff-Förderanordnung 18 eine geringere Brennstoffmenge in die Brennkammer 16 einspeist. Entsprechend wird auch der Antriebsmotor 44 angesteuert, um durch Verringerung der Drehzahl der Antriebswelle 46 die durch das Verbrennungsluft-Förderrad 20 geförderte Verbrennungsluft-Fördermenge zu reduzieren. Dies führt zu einem allmählichen Abnehmen der durch die Kurve K₁ repräsentierten Temperaturgröße.

Einhergehend mit dem Verringern der Verbrennungsluft-Fördermenge wird zwangsweise auch die Heizluft-Fördermenge verringert, da auch das Förderrad 38 mit geringerer Drehzahl rotieren wird. Eine geringere Heizluft-Fördermenge führt jedoch zu einem entsprechend verringerten Abtrag der im Wärmetauschergehäuse 26 aufgenommenen Wärme, was sich durch einen mit dem Zeitpunkt t₁ beginnenden Anstieg der Kurve K₂ erkennbar macht. Da dieser Anstieg für diesen Zustand der gewollten Verringerung der Heizleistung jedoch kein kritischer Zustand ist und der vorangehend mit Bezug auf die Fig. 3 dargelegte Zustand vermieden werden soll, dass zur Unzeit das Vorliegen eines Störfalls erkannt wird, wird erfindungsgemäß in Zuordnung zu dieser gezielten Verringerung der Heizleistung auch die für die durch die Kurve K₂ repräsentierte Temperaturgröße vorgesehene Temperaturgrößenschwelle S verändert. Man erkennt, dass zum Zeitpunkt der Verringerung der Heizleistung diese Temperaturgrößenschwelle S von ihrem Ausgangswert T_{S} auf einen angepassten Wert T_{S}' erhöht wird. Der dann nach dem Zeitpunkt t₁ zu erwartende vorübergehende Anstieg der durch die Kurve K₂ repräsentierten Temperaturgröße führt dann nicht zu einem Überschreiten der Temperaturgrößenschwelle S und mithin nicht zu einem Erkennen eines Überhitzungszustandes.

Das Ausmaß der Veränderung der Temperaturgrößenschwelle S, also die Differenz zwischen den beiden Werten T_{S}' und T_{S} kann in Abhängigkeit von der Variation der Heizleistung vorgenommen werden. Das heißt, wird die Heizleistung stärker verringert, kann auch die Temperaturgrößenschwelle S stärker angehoben werden. Eine nur geringere Veränderung der Heizleistung kann eine entsprechend geringere Veränderung der Temperaturgrößenschwelle S mit sich bringen. Hier kann beispielsweise ein linearer Zusammenhang bestehen, wobei weiterhin bis zu einem unteren Grenzwert der Heizleistungsänderung auf das Verändern der Temperaturgrößenschwelle S vollständig verzichtet werden kann. Selbstverständlich ist es auch möglich, mehrere Heizleistungsveränderungsbereiche zu definieren, welchen dann einzelne diskrete Veränderungswerte der Temperaturgrößenschwelle S zugeordnet sind.

Da im normalen Betrieb nach dem kurzzeitigen bzw. vorübergehenden Anstieg der Kurve K₂ bzw. der durch das Ausgangssignal 40 des Temperaturfühlers 52 repräsentierten Temperatur im Abströmbereich der Wärmetauscheranordnung 28 wieder in einen normalen Überwachungsmodus übergegangen werden soll, ist es auch vorteilhaft, die Temperaturgrößenschwelle S wieder zu senken, beispielsweise auf ihren vor der Erhöhung vorhandenen Ausgangswert T_{S}. Diese in Fig. 2 zum Zeitpunkt t₂ vorgenommene Verringerung der Temperaturgrößenschwelle S kann beruhend auf verschiedenen Parametern erfolgen. Beispielsweise ist es möglich, eine fest vorgegebene Zeitspanne zu setzen, innerhalb welcher nach Erhöhung die Temperaturgrößenschwelle S auf dem erhöhten Wert T_{S}' bleibt und nach deren Ablauf die Temperaturgrößenschwelle S wieder auf den Ausgangswert T_{S} zurückgesetzt wird. Die Länge dieser Zeitdauer kann fest oder in Abhängigkeit vom Ausmaß der Veränderung der Heizleistung vorgegeben werden. Bei größerer Heizleistungsveränderung und mithin ggf. auch stärkerer Erhöhung der Temperaturgrößenschwelle kann es vorteilhaft sein, das für diese Erhöhung vorgegebene Zeitfenster auch länger zu wählen.

Bei einer alternativen Vorgehensweise ist es möglich, die Temperaturgrößenschwelle von ihrem erhöhten Wert T_{S}' wieder zurücksetzen, wenn die Temperaturgröße S, also die diese Temperaturgröße repräsentierende Kurve K₂, den vor der Erhöhung vorhandenen Wert T_{S} der Temperaturgrößenschwelle S wieder unterschreitet. Selbstverständlich kann hier auch ein anderer Wert für diese Schwelle zum Zurücksetzen vorgegeben werden.

Bei einer weiteren alternativen Vorgehensweise kann die Veränderung der beobachteten Temperaturgröße berücksichtigt werden, welche im Wesentlichen repräsentiert ist durch den Gradienten der Kurve K₂. Fällt diese Kurve K₂ und mithin die dadurch repräsentierte Temperaturgröße ausreichend stark ab, was dadurch repräsentiert ist, dass der Gradient der Kurve K₂ einen vorgegebenen negativen Schwellenwert unterschreitet, im Betrag also zunimmt, so kann auch dann entschieden werden, dass die Erhöhung der Temperaturgrößenschwelle S nicht beibehalten werden muss und diese beispielsweise wieder auf ihren Ausgangswert T_{S} zurückgesetzt werden kann.

Mit der vorangehend beschriebenen Vorgehensweise bzw. dem diese Vorgehensweise implementierenden Aufbau eines Fahrzeugheizgeräts ist es also möglich, insbesondere dann, wenn eine Variation der Verbrennungsluft-Fördermenge auch eine Variation der Heizluft-Fördermenge erzwingt, das Erkennen eines Überhitzungszustands zu vermeiden, wenn zwar ein vorübergehender Temperaturanstieg im Abströmbereich der Wärmetauscheranordnung erkannt wird, dieser jedoch die zwingende Folge einer bestimmten gezielt vorzunehmenden Ansteuermaßnahme, nämlich der Verringerung der Heizleistung, ist. Diese Maßnahme kann selbstverständlich auch dann vorteilhaft sein bzw. ergriffen werden, wenn zwar die verschiedenen Förderorgane zum Fördern des Heizmediums einerseits und der Verbrennungsluft andererseits nicht durch den gleichen Antriebsmotor angetrieben werden, sondern der gemeinsame Antrieb dadurch gebildet ist, dass zwar verschiedene Antriebsmotoren existieren, jedoch eine ansteuerungstechnische Verknüpfung dahingehend besteht, dass die jeweils bereitgestellten Fördermengen in miteinander zusammenhängender Art und Weise variiert werden. Auch diese Maßnahme bzw. Ausgestaltung kann im Sinne der vorliegenden Erfindung als gemeinsamer Antrieb interpretiert werden.

## Patentansprüche

1. Fahrzeugheizgerät, umfassend:
- eine Brenneranordnung (12) mit einer Brennkammer (16),
- eine Brennstoffzuführanordnung (18) zum Einspeisen von Brennstoff in die Brennkammer (16),
- ein Verbrennungsluft-Förderorgan (20) zum Fördern von Verbrennungsluft in die Brennkammer (16),
- eine Wärmetauscheranordnung (28) mit einem die Brenneranordnung (12) wenigstens bereichsweise umgebenden Wärmetauschergehäuse (26),
- ein Heizmedium-Förderorgan (36) zum Fördern von zu erwärmendem Heizmedium durch die Wärmetauscheranordnung (28) entlang einer Außenseite des Wärmetauschergehäuses (26),
- eine Temperaturfühleranordnung (50) zur Erfassung einer mit der Temperatur des Heizmediums in einem Abströmbereich (40) der Wärmetauscheranordnung (28) in Zusammenhang stehenden Temperaturgröße (K₂),
- eine Ansteuervorrichtung (48), welche ein die Temperaturgröße (K₂) repräsentierendes Signal von der Temperaturfühleranordnung empfängt und die Temperaturgröße (K₂) mit einer zugeordneten Temperaturgrößenschwelle (S) vergleicht, wobei die Ansteuervorrichtung (48) dann, wenn die Temperaturgröße (K₂) die Temperaturgrößenschwelle (S) übersteigt, das Vorliegen eine Überhitzungszustandes erkennt, **dadurch gekennzeichnet, dass** die Ansteuervorrichtung (48) dazu ausgebildet ist, dann, wenn die Heizleistung durch Verringerung der Verbrennungsluft-Fördermenge oder/und der Brennstoff-Fördermenge zu verringern ist, die Temperaturgrößenschwelle (S) zu erhöhen.

2. Fahrzeugheizgerät nach Anspruch 1,
**dadurch gekennzeichnet, dass** dem Verbrennungsluft-Förderorgan (20) und dem Heizmedium-Förderorgan (38) ein gemeinsamer Antrieb (44) zugeordnet ist.

3. Fahrzeugheizgerät nach Anspruch 2,
**dadurch gekennzeichnet, dass** der gemeinsame Antrieb (44) einen gemeinsamen Antriebsmotor umfasst.

4. Fahrzeugheizgerät nach einem der Ansprüche 1 bis 3,
**dadurch gekennzeichnet, dass** das Heizmedium Heizluft ist und dass das Heizmedium-Förderorgan (38) und das Verbrennungsluft-Förderorgan (20) jeweils als Förderrad ausgebildet sind.

5. Fahrzeugheizgerät nach einem der Ansprüche 1 bis 4,
**dadurch gekennzeichnet, dass** die Temperaturfühleranordnung (50) einen im Abströmbereich (40) der Wärmetauscheranordnung (28) vorgesehenen Temperaturfühler (52) umfasst.

6. Fahrzeugheizgerät nach Anspruch 5,
**dadurch gekennzeichnet, dass** der Temperaturfühler (52) an einem abströmseitigen Endbereich (24) des Wärmetauschergehäuses (26) angeordnet ist.

7. Verfahren zum Betreiben eines Fahrzeugheizgerätes, insbesondere nach einem der vorhergehenden Ansprüche, weiches Verfahren die Maßnahmen umfasst:
a) Einspeisen von Brennstoff und Verbrennungsluft in eine Brennkammer (16),
b) Überwachen einer im Zusammenhang mit der Temperatur eines zu erwärmenden Heizmediums in einem Abströmbereich (40) einer Wärmetauscheranordnung (28) stehenden Temperaturgröße (K₂) durch Vergleich mit einer zugeordneten Temperaturgrößenschwelle (S),
c) dann, wenn die Temperaturgröße (K₂) die zugeordnete Temperaturgrößenschwelle (S) übersteigt, Erkennen eines Überhitzungszustands, und **dadurch gekennzeichnet, dass** dann, wenn die Heizleistung durch Veränderung einer Verbrennungsluft-Fördermenge oder/und einer Brennstoff-Fördermenge zu verringern ist, die Temperaturgrößenschwelle (S) erhöht wird.

8. Verfahren nach Anspruch 7,
**dadurch gekennzeichnet, dass** zur Verringerung der Heizleistung die Verbrennungsluft-Fördermenge verringert wird und dass bei Verringerung der Verbrennungsluft-Fördermenge die Heizmedium-Fördermenge verringert wird.

9. Verfahren nach Anspruch 7 oder 8,
**dadurch gekennzeichnet, dass** das Ausmaß der Erhöhung der Temperaturgrößenschwelle (S) im Zusammenhang steht mit dem Ausmaß der Verringerung der Heizleistung.

10. Verfahren nach einem der Ansprüche 7 bis 9,
**dadurch gekennzeichnet, dass** die Temperaturgrößenschwelle (S) ab der Erhöhung derselben für eine vorbestimmte Zeitdauer erhöht bleibt.

11. Verfahren nach 10,
**dadurch gekennzeichnet, dass** die vorbestimmte Zeitdauer im Zusammenhang steht mit dem Ausmaß der Verringerung der Heizleistung.

12. Verfahren nach einem der Ansprüche 7 bis 9,
**dadurch gekennzeichnet, dass** die Temperaturgrößenschwelle (S) in Abhängigkeit von der Veränderung der Temperaturgröße (K₂) nach Erhöhung der Temperaturgrößenschwelle (S) wieder verringert wird.

13. Verfahren nach Anspruch 12, **dadurch gekennzeichnet, dass** die Temperaturgrößenschwelle (S) dann, wenn der Gradient der Temperaturgröße (K₂) eine vorbestimmte negative Gradientenschwelle unterschreitet, wieder verringert wird.

14. Verfahren nach einem der Ansprüche 7 bis 9,
**dadurch gekennzeichnet, dass** die Iemperaturgrößenschwelle (S) nach Erhöhung derselben dann wieder verringert wird, wenn die Temperaturgröße (K₂) einen vor der Erhöhung der Temperaturgrößenschwelle (S) vorhandenen Ausgangswert (T_{S}) derselben unterschreitet.

15. Verfahren nach einem der Ansprüche 12 bis 14,
**dadurch gekennzeichnet, dass** die Temperaturgrößenschwelle (S) auf einen vor der Erhöhung derselben vorhandenen Ausgangswert (T_{S}) zurückgesetzt wird.

## Claims

1. Vehicle heating device, comprising:
- a burner arrangement (12) with a combustion chamber (16),
- a fuel supply arrangement (18) for inserting fuel into said combustion chamber (16),
- a combustion air conveying member (20) for conveying combustion air to said combustion chamber (16),
- a heat exchanger arrangement (28) with a heat exchanger housing (26) surrounding at least partly said burner arrangement (12),
- a heating medium conveying member (36) for conveying a heating medium to be heated through said heat exchanger arrangement (28) along an outer side of said heat exchanger housing (26),
- a temperature sensor arrangement (50) for detecting a temperature variable (K₂) associated to the temperature of the heating medium in a discharge area (40) of said heat exchanger arrangement (28),
- a controlling device (48) receiving a signal from said temperature sensor arrangement representing said temperature variable (K₂) and comparing said temperature variable (K₂) to an associated temperature variable threshold (S), said controlling device (48) detecting an overheating condition when said temperature variable (K₂) exceeds said temperature variable threshold (S),
**characterized by**
said controlling device (48) being adapted for increasing said temperature variable threshold (S) when the heating performance has to be reduced by reducing said combustion air conveying volume or/and said fuel supply volume.

2. The vehicle heating device according to claim 1,
**characterized by** a common drive (44) being associated to said combustion air conveying member (20) and said heating medium conveying member (38).

3. The vehicle heating device according to claim 2,
**characterized by** said common drive (44) comprising a common drive motor.

4. The vehicle heating device according to one of claims 1 to 3,
**characterized by** said heating medium being heated air and by said heating medium conveying member (38) and said combustion air conveying member (20) being both designed as conveyance wheel.

5. The vehicle heating device according to one of claims 1 to 4,
**characterized by** said temperature sensor arrangement (50) comprising a temperature sensor (52) provided in said discharge area (40) of said heat exchanger arrangement (28).

6. The vehicle heating device according to claim 5,
**characterized by** said temperature sensor (52) being arranged at a downstream side end section (24) of said heat exchanger housing (26).

7. A method for operating a vehicle heating device, in particular according to one of the preceding claims, the method comprising:
a) inserting fuel and combustion air into a combustion chamber (16),
b) monitoring a temperature variable (K₂) associated to the temperature of a heating medium to be heated in a discharge area (40) of a heat exchanger arrangement (28) by comparison with an associated temperature variable threshold (S),
c) when said temperature variable (K₂) exceeds said temperature variable threshold (S) detecting an overheating condition, and **characterized in that** when the heating performance has to be reduced by reducing said combustion air conveying volume or/and said fuel supply volume, said temperature variable threshold (S) is increased.

8. The method according to claim 7,
**characterized by** said combustion air conveying volume being reduced for reducing said heating performance and by said heating medium conveying volume being reduced when said combustion air conveying volume is reduced.

9. The method according to claim 7 or 8,
**characterized by** the extent of the increase in said temperature variable threshold (S) being related to the extent of the reduction of said heating performance.

10. The method according to one of claims 7 to 9,
**characterized by** said temperature variable threshold (S) remaining increased for a predefined period after the increase.

11. The method according to claim 10,
**characterized by** said predefined period being related to the extent of reduction of said heating performance.

12. The method according to one of claims 7 to 9,
**characterized in that** after having increased said temperature variable, threshold (S), said temperature variable threshold (S) is again reduced depending on the change of temperature variable (K₂).

13. The method according to claim 12, **characterized by** said temperature variable threshold (S) being reduced when the gradient of said temperature variable (K₂) falls below a predefined negative gradient limit.

14. The method according to one of claims 7 to 9,
**characterized in that** after an increase of said temperature variable threshold (S) the latter is reduced when said temperature variable (K₂) falls below an initial value (T_{S}) of said temperature variable threshold (S) existing prior to the increase of the latter.

15. The method according to one of claims 12 to 14,
**characterized by** said temperature variable threshold (S) being set back to an initial value (T_{S}) existing prior to the increase of the latter.

## Revendications

1. Dispositif de chauffage pour un véhicule, comprenant:
- un arrangement de brûleur (12) avec une chambre de combustion (16),
- un arrangement d'alimentation en combustible (18) pour insérer du combustible dans la chambre de combustion (16),
- un élément de transport d'air de combustion (20) pour transporter de l'air de combustion envers la chambre de combustion (16) ;
- un arrangement d'échangeur de chaleur (28) avec un boîtier d'échangeur de chaleur (26) entourant en moins en partie l'arrangement de brûleur (12),
- un élément de transport de médium de chauffage (36) pour transporter un médium de chauffage à chauffer à travers l'arrangement d'échangeur de chaleur (28) le long d'un côté externe du boîtier d'échangeur de chaleur (26),
- un arrangement de capteurs de température (50) pour détecter une variable de température (K₂) associée à la température du médium de chauffage dans une zone de décharge (40) de l'arrangement d'échangeur de chaleur (28),
- un dispositif de commande (48) recevant un signal de l'arrangement de capteurs de température représentant la variable de température (K₂) et comparant ladite variable de température (K₂) à un seuil de variable de température (S) associé, le dispositif de commande (48) détectant une condition de surchauffe quand la variable de température (K₂) dépasse le seuil de variable de température (S), **caractérisé par**
le dispositif de commande (48) étant adapté pour augmenter le seuil de variable de température (S) lorsque la puissance de chauffage doit être réduite en réduisant la quantité d'air de combustion ou/et la quantité de combustible inséré.

2. Le dispositif de chauffage pour un véhicule selon la revendication 1, **caractérisé par** un dispositif d'entraînement commun (44) étant associé à l'élément de transport d'air de combustion (20) et à l'élément de transport du médium de chauffage (38).

3. Le dispositif de chauffage pour un véhicule selon la revendication 2, **caractérisé par** le dispositif d'entraînement commun (44) comprenant un moteur d'entraînement commun.

4. Le dispositif de chauffage pour un véhicule selon une des revendications 1 à 3, **caractérisé par** le médium de chauffage étant de l'air chauffée et par l'élément de transport du médium de chauffage (38) et l'élément de transport d'air de combustion (20) étant adaptés en tant que roue de transport.

5. Le dispositif de chauffage pour un véhicule selon une des revendications 1 à 4, **caractérisé par** l'arrangement de capteurs de température (50) comprenant un capteur de température (52) prévu dans la zone de décharge (40) de l'arrangement d'échangeur de chaleur (28).

6. Le dispositif de chauffage pour un véhicule selon la revendication 5, **caractérisé par** le capteur de température (52) étant disposé à une zone terminale en aval (24) du boîtier d'échangeur de chaleur (26).

7. Une méthode pour opérer un dispositif de chauffage pour un véhicule, en particulier selon une des revendications précédentes, ladite méthode comprenant les mesures suivantes :
a) insérer du combustible et de l'air de combustion dans une chambre de combustion (16),
b) surveiller une variable de température (K₂) associée à la température d'un médium à chauffer dans une zone de décharge (40) d'un arrangement d'échangeur de chaleur (28) par comparaison avec un seuil de variable de température (S) associé,
c) détecter une condition de surchauffe quand la variable de température (K₂) dépasse le seuil de variable de température (S),
et **caractérisée par** le seuil de variable de température (S) étant augmenté lorsque la puissance de chauffage doit être réduite en réduisant la quantité d'air de combustion ou/et la quantité de combustible inséré.

8. La méthode selon la revendication 7,
**caractérisée par** la quantité d'air de combustion étant réduite pour réduire la puissance de chauffage et par la quantité de médium de chauffage étant réduite lorsque la quantité d'air de combustion est réduite.

9. La méthode selon la revendication 7 ou 8,
**caractérisée par** l'étendu de l'augmentation du seuil de variable de température (S) étant relié à l'étendu de la réduction de la puissance de chauffage.

10. La méthode selon une des revendications 7 à 9,
**caractérisée par** le seuil de variable de température (S) restant augmenté pendant une période prédéfinie après l'augmentation.

11. La méthode selon la revendication 10,
**caractérisée par** ladite période prédéfinie étant reliée à-l'étendu de la réduction de la puissance de chauffage.

12. La méthode selon une des revendications 7 à 9,
**caractérisée par** le seuil de variable de température (S) étant de nouveau réduite après l'augmentation du seuil de variable de température (S) dépendant du changement de la variable de température (K₂).

13. La méthode selon la revendication 12,
**caractérisée par** le seuil de variable de température (S) étant de nouveau réduite lorsque le gradient de la variable de température (K₂) reste inférieur à un seuil de gradient négatif prédéfini.

14. La méthode selon une des revendications 7 à 9,
**caractérisée par** le seuil de variable de température (S) étant de nouveau réduit après l'augmentation du dernier lorsque la variable de température (K₂) reste inférieure à une valeur de départ (TS) existant avant l'augmentation du seuil de variable de température (S).

15. La méthode selon une des revendications 12 à 14,
**caractérisée par** le seuil de variable de température (S) revenant à une valeur de départ (T_{S}) existant avant l'augmentation du dernier.
